# FASCICULE DE BREVET EUROPEEN

(11) **EP 1 267 064 B1**
(45) Date de publication et mention de la délivrance du brevet: **31.05.2006**
(21) Numéro de dépôt: 02291409.7
(22) Date de dépôt: 07.06.2002
(51) Int. Cl.: F02K 3/075, F02K 3/02, F02K 3/12

(54) **Dispositif de propulsion à cycle variable par dérivation de gaz pour avion supersonique**
Schubvorrichtung mit variablen Betriebszyklen mit aufgeteiltem Abgasstrom für Überschallflugzeuge
Variable cycle propulsion device for supersonic airplanes using diverted exhaust gas

(30) Priorité: 14.06.2001 FR 0107771
(43) Date de publication de la demande: 18.12.2002
(73) Titulaire: SNECMA, 75015 Paris (FR)
(72) Inventeur: Franchet, Michel, 77240 Pouilly-le-Fort (FR); Laugier, Yann, 94880 Noiseau (FR); Loisy, Jean, 77310 Ponthierry (FR)
(74) Mandataire: Boura, Olivier

(56) Documents cités:
- FR-A- 2 784 960
- US-A- 3 215 369
- US-A- 4 193 262

## Description

La présente invention est relative à un dispositif de propulsion à cycle variable pour avion supersonique qui permet d'obtenir, d'une part au décollage, à l'atterrissage et en vol en croisière subsonique une forte poussée et un haut taux de dilution afin d'abaisser fortement et d'améliorer la consommation spécifique lors de ces phases de vol, et d'autre part une forte vitesse d'éjection adaptée au vol en croisière supersonique.

Elle vise plus particulièrement un dispositif de propulsion comportant des soufflantes auxiliaires dissociées des propulseurs et adaptées aux phases de vol subsonique (en termes de bruit et de consommation).

Selon un autre aspect de l'invention, elle vise également un procédé de fonctionnement de ce dispositif de propulsion à cycle variable.

Lors de la conception d'un avion commercial supersonique, il se pose notamment le problème du faible bruit du moteur de l'avion au décollage, en montée et à l'atterrissage de celui-ci. En effet, afin d'être certifiés, tous les avions doivent maintenant respecter les réglementations quant au faible bruit au décollage et à l'atterrissage.

Par ailleurs, les moteurs d'avions supersoniques doivent également répondre aux exigences de faible traînée des nacelles en croisière supersonique, de faible consommation spécifique pendant le survol de zones habitées en vitesse de croisière subsonique, et de réduction des émissions polluantes d'oxydes d'azote à proximité de la couche d'ozone à haute altitude.

Afin de répondre à ces différentes exigences, les constructeurs de moteurs ont proposé un moteur à cycle variable pour la propulsion d'avions supersoniques. Typiquement, ce type de moteur adopte deux configurations différentes; l'une pour le vol en croisière subsonique, le décollage et l'atterrissage, et l'autre pour le vol en croisière supersonique car il existe une certaine incompatibilité entre ces deux phases de vol pour le fonctionnement du moteur.

En effet, l'exigence sur le faible bruit du moteur au décollage et à l'atterrissage implique notamment une faible vitesse d'éjection des gaz au décollage, à l'atterrissage et en vitesse de croisière subsonique, ce qui est en contradiction avec un vol en croisière supersonique qui impose une forte vitesse d'éjection des gaz.

Or, le niveau de bruit dépend de la vitesse d'éjection des gaz, et pour réduire celui-ci à un niveau acceptable, cette vitesse doit être aujourd'hui inférieure à 400 mètres par seconde ce qui correspond à un seuil de 103dB (300m/s soit 90dB à partir de 2006 selon les nouvelles réglementations). Une telle vitesse d'éjection implique donc un moteur à faible poussée spécifique, ce qui correspond à un taux de dilution important, c'est-à-dire une forte traînée en vol de croisière supersonique.

Ainsi, les moteurs à cycle variable proposés par les constructeurs essaient de combiner le faible niveau de bruit au décollage et à l'atterrissage, une faible consommation spécifique en croisière subsonique et une forte poussée spécifique en croisière supersonique à haute altitude.

On connaît plusieurs concepts de moteurs à cycle variable, mais la variation du taux de dilution de ces derniers n'offre pas une bonne optimisation dans les configurations subsonique et supersonique.

En effet, adopter une vitesse d'éjection des gaz égale ou inférieure à 400m/s exige notamment une nacelle de moteur de diamètre important et tous les moteurs à cycle variable connus à ce jour requièrent une section frontale de la nacelle plus importante que celle optimisée pour le vol en croisière supersonique.

On connaît par exemple du brevet américain US 5,529,263 la description d'un avion supersonique comportant un ensemble propulsif pour le décollage, l'atterrissage et le vol en croisière subsonique et deux propulseurs adaptés au vol en croisière supersonique. L'ensemble propulsif est constitué de turboréacteurs d'appoint escamotables à haut taux de dilution, ce qui présente de nombreux inconvénients, notamment d'encombrement et de poids pour l'appareil.

On connaît aussi le brevet US 4,193,262 qui décrit un dispositif de propulsion comportant un propulseur et une turbine disposée dans le trajet d'écoulement des gaz d'échappement. Le brevet US 3,215,369 décrit un dispositif de propulsion formé d'un propulseur et deux soufflants escamotables.

### Objet et résumé de l'invention

La présente invention vise donc à pallier de tels inconvénients en proposant un dispositif de propulsion à cyde variable pour avions supersoniques qui sépare nettement les deux configurations, subsonique et supersonique, grâce notamment à l'utilisation d'une ou plusieurs soufflantes auxiliaires dissociées de grand diamètre, éventuellement escamotables en vol de croisière supersonique.

A cet effet, il est prévu un dispositif de propulsion à cycle variable pour avion supersonique selon la revendication 1 et comprenant au moins un propulseur comportant des moyens pour produire des gaz d'échappement et une tuyère d'éjection de gaz pour générer une poussée pour les vitesses de vol supersonique, et au moins un ensemble propulsif auxiliaire distinct et dissocié dudit propulseur, dépourvu de générateur de gaz; comportant une turbine et au moins une soufflante entraînée en rotation par la turbine et capable de générer une poussée pour le décollage, l'atterrissage et les vitesses de vol subsonique, ledit dispositif étant caractérisé en ce qu'il comporte en outre des moyens de dérivation de flux gazeux mobiles entre une position dans laquelle ils dérivent au moins une partie des gaz d'échappement produits par ledit propulseur vers ledit ensemble propulsif afin que celui-ci génère une poussée pour le décollage, l'atterrissage et le vol en croisière subsonique, et une position dans laquelle les gaz produits par le propulseur sont uniquement dirigés vers la tuyère de celui-ci pour le vol en croisière supersonique, l'ensemble propulsif auxiliaire étant adapté à être logé dans un fuselage de l'avion de manière à réduire la traînée et à améliorer l'isolation acoustique.

Ainsi, l'ensemble propulsif dédié au décollage, à l'atterrissage et au vol en croisière subsonique utilise des ressources (générateur de gaz) du ou des propulseurs dédiés au vol en croisière supersonique. Cet ensemble propulsif comporte une ou plusieurs soufflantes entraînées par les gaz dérivés du ou des propulseurs. Celles-ci sont logées dans le fuselage de l'avion de sorte qu'elles peuvent avoir les dimensions nécessaires pour produire la poussée requise avec fort taux de dilution, tout en conservant une traînée réduite en vol supersonique.

### Brève description des dessins

D'autres caractéristiques et avantages de la présente invention ressortiront de la description faite ci-dessous, en référence aux dessins annexés, de plusieurs modes de réalisation dépourvus de tout caractère limitatif. Sur les figures :
- les figures 1a et 1b représentent une vue schématique d'un dispositif de propulsion selon un premier mode de réalisation de l'invention, en configuration respectivement pour le décollage, l'atterrissage et le vol en croisière subsonique et pour le vol en croisière supersonique;
- la figure 2 est une vue partielle en coupe longitudinale d'un avion supersonique comportant le dispositif de la figure 1 dans les deux configurations d'utilisation;
- la figure 3 est une vue schématique en perspective d'un avion comportant un dispositif de propulsion selon un second mode de réalisation de l'invention.

### Description détaillée de modes de réalisation

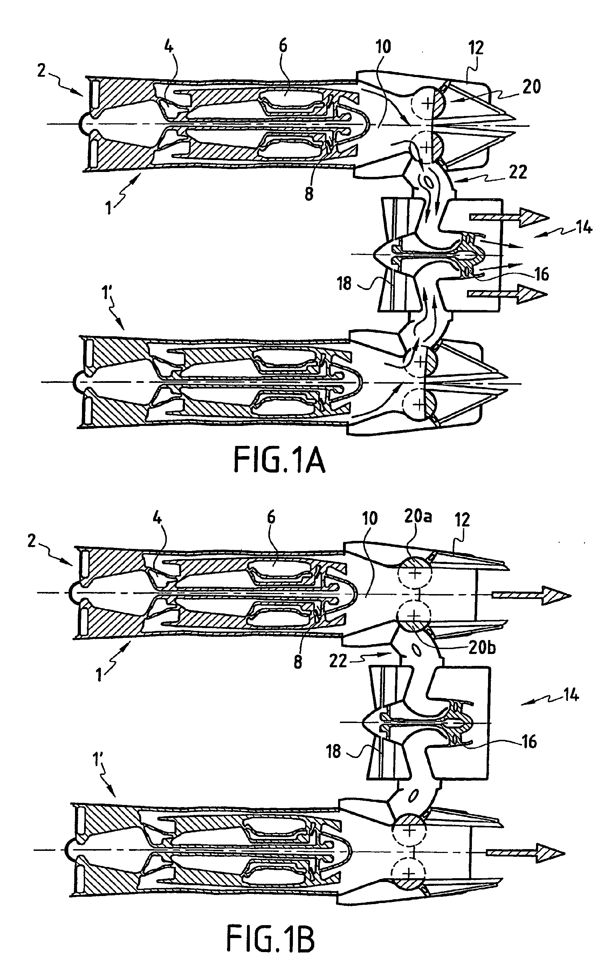

Si on se réfère aux figures 1a et 1b qui représentent schématiquement une coupe longitudinale d'un dispositif selon un premier mode de réalisation de l'invention, on voit que celui-ci est notamment constitué de deux propulseurs 1 et 1'. Ces propulseurs sont classiquement disposés dans des nacelles de faible traînée (non représentées) qui sont généralement reliées à la face inférieure d'une aile d'avion, mais qui peuvent également être installées sur l'extrados de l'aile.

De façon connue, ces propulseurs peuvent être du type monoflux à simple corps, double corps ou triple corps ou encore du type double-flux à simple, double ou triple corps. Dans cet exemple de réalisation, ils comportent notamment chacun une entrée d'air 2, une section de compression 4, une chambre de combustion 6, une section de turbine 8 et une section d'éjection 10 des gaz de combustion. Les propulseurs sont en outre dimensionnés de façon optimale pour le vol en croisière supersonique (période de vol la plus longue).

La section d'éjection 10 des gaz d'échappement se termine notamment par une tuyère 12 à géométrie variable, axisymétrique ou bidimensionnelle par exemple afin d'assurer les variations de la section d'éjection (ouverture ou fermeture et dérivation totale ou partielle) pendant toutes les phases de vol (décollage, atterrissage, vol en croisières subsonique et supersonique).

De plus, toujours selon ce premier mode de réalisation de l'invention, le dispositif de propulsion comporte également un ensemble propulsif auxiliaire 14 distinct et dissocié des deux propulseurs 1 et 1' et dépourvu de générateur de gaz. Par dissocié du propulseur, on entend que l'ensemble propulsif auxiliaire n'est pas intégré dans l'un ou l'autre des propulseurs, mais plutôt délocalisé par rapport à ceux-ci. Cet ensemble propulsif est composé d'une turbine 16 et d'une soufflante 18 avantageusement de grand diamètre et entraînée en rotation par ladite turbine. Cet ensemble propulsif est utilisé pour le décollage, l'atterrissage et le vol en croisière subsonique selon une configuration qui sera détaillée plus loin.

Classiquement, la soufflante 18 peut être mono ou multi-étage, à large corde ou contrarotative, et elle est entraînée en rotation par la turbine 16 qui peut éventuellement être d'extrémité, munie d'un moyeu multi-étage et/ou d'un réducteur.

Par ailleurs, des moyens 20 de dérivation d'au moins une partie des gaz d'échappement produits par les propulseurs 1 et 1' et d'obturation de la tuyère 12 de ces propulseurs sont également prévus au niveau de cette dernière afin d'alimenter en gaz ledit ensemble propulsif.

Ces moyens de dérivation peuvent, par exemple, être composés de deux volets 20a et 20b (ou demi-coquilles) disposés au niveau de la tuyère 12 de chaque propulseur sur le trajet d'éjection des gaz d'échappement, ainsi que d'une ou plusieurs tubulures 22 reliant la section d'éjection 10 des gaz d'échappement de chaque propulseur à l'ensemble propulsif 14.

Dans chaque propulseur, les deux volets peuvent pivoter autour d'un axe par l'intermédiaire d'une commande appropriée afin de définir au moins deux positions : une position correspondant à la dérivation d'au moins une partie des gaz d'échappement vers l'ensemble propulsif par l'intermédiaire d'au moins une tubulure 22, la tuyère 12 du propulseur étant alors obturée au moins partiellement par les volets, et l'autre position correspondant à une non-dérivation, la tuyère 12 étant ouverte et la tubulure 22 étant obturée par l'un (20b) des volets. Le passage d'une configuration à l'autre est produit par une commande appropriée faisant basculer les volets 20a et 20b de l'autre à l'autre de leurs positions.

On notera que l'ouverture ou l'obturation au moins partielle des tuyères des propulseurs, d'une part, et l'obturation ou l'ouverture de l'accès aux tubulures 22, d'autre part, peuvent être produites par des organes distincts actionnés en synchronisme.

On peut également envisager que dans leur position de non-dérivation, les volets 20a et 20b ou des organes actionnés en synchronisme avec ceux-ci viennent obturer complètement la tubulure 22 afin d'empêcher l'alimentation de l'ensemble propulsif 14 en gaz.

Les tubulures 22 se présentent sous la forme de conduits débouchant au niveau de la volute de la turbine 16. De plus, dans le cas où le dispositif de propulsion comporte au moins deux propulseurs 1 et 1' alimentant un unique ensemble propulsif 14, les tubulures 22 débouchent au niveau de la turbine 16 dans des secteurs avantageusement isolés les uns des autres. Cette caractéristique permet d'augmenter la sécurité du dispositif. En effet, en cas de panne de l'un des propulseurs 1 et 1', il n'y a ainsi pas de risque que les gaz produits par l'autre propulseur puissent pénétrer au niveau du propulseur en panne.

On décrira maintenant le fonctionnement du dispositif de propulsion selon ce premier mode de réalisation de l'invention, dans ses deux configurations possibles (phase de décollage/atterrissage, vol en croisière subsonique et phase de vol en croisière supersonique).

Au cours du décollage et de l'atterrissage (cf. figure 1a), les propulseurs 1 et 1' fonctionnent à régime un peu réduit, les tuyères 12 d'échappement de ces derniers sont obturées et les moyens 20 de dérivation des gaz d'échappement sont actionnés afin d'alimenter en gaz la turbine 16 de l'ensemble propulsif 14, ladite turbine entraînant alors la soufflante 18.

Le dispositif de propulsion travaille ainsi à haut taux de dilution et à faible poussée spécifique ce qui est bien adapté aux phases de décollage, d'atterrissage et de vol en croisière subsonique tout en répondant plus facilement aux exigences de bruit et de faible consommation spécifique. Par taux de dilution, on entend le rapport entre la masse d'air éjectée produite par les soufflantes et la masse des gaz d'échappement éjectés produits par les propulseurs 1, 1'.

En effet, les gaz d'échappement produits par les propulseurs 1 et 1' en entraînant la soufflante 18 sont fortement ralentis ce qui implique une faible vitesse d'éjection des gaz favorable à un faible niveau de bruit.

Pendant l'accélération de l'avion et au cours du vol en croisière subsonique, les tuyères 12 des propulseurs 1 et 1' sont avantageusement légèrement ouvertes afin de réduire la traînée du culot.

La transition entre la phase de vol en croisière subsonique et celle de vol en croisière supersonique (cf. figure 1b) s'effectue alors en déplaçant les moyens 20 de dérivation pour ouvrir progressivement la tuyère 12 et obturer les tubulures 22 jusqu'à l'arrêt de l'ensemble propulsif 14. Les propulseurs 1 et 1' assurent alors seuls la propulsion de l'avion et permettent à celui-ci d'atteindre des vitesses de vol supersonique. Le dispositif fonctionne ainsi à un très faible (voire nul) taux de dilution et forte vitesse d'éjection (ce qui correspond bien à une forte poussée spécifique).

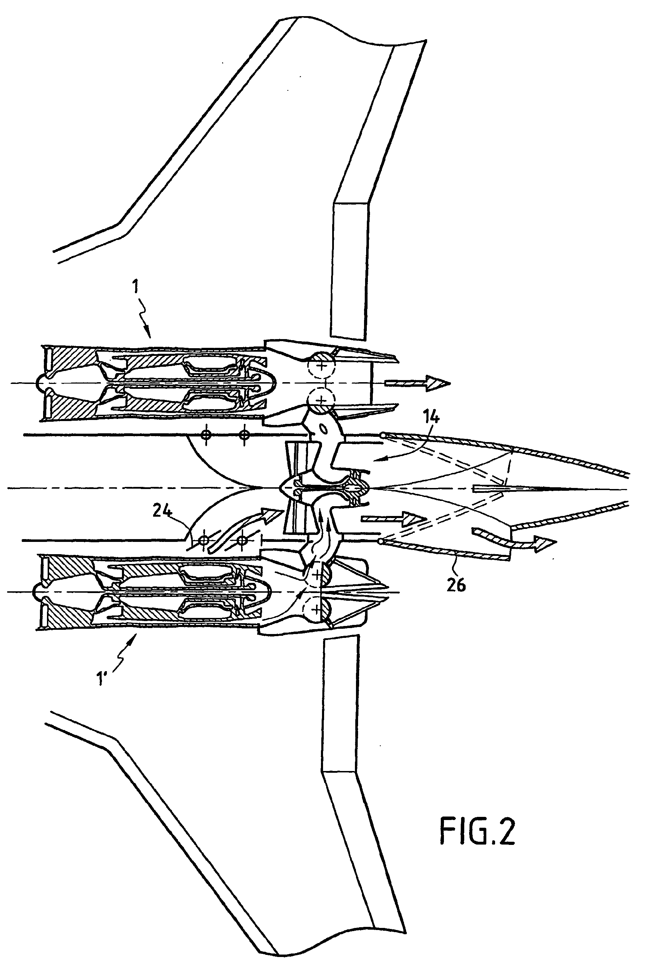

Comme le montre la figure 2, l'ensemble propulsif 14 peut être intégré directement dans le fuselage de l'avion, dans la partie arrière de celui-ci. Pour ce faire, des ouïes latérales 24 escamotables sont disposées sur le fuselage de l'avion afin d'assurer l'alimentation en air de l'ensemble propulsif 14, et des tuyères d'échappement déployables 26 permettent d'évacuer les gaz issus de l'ensemble propulsif pendant les phases de décollage, d'atterrissage et de vol en croisière subsonique.

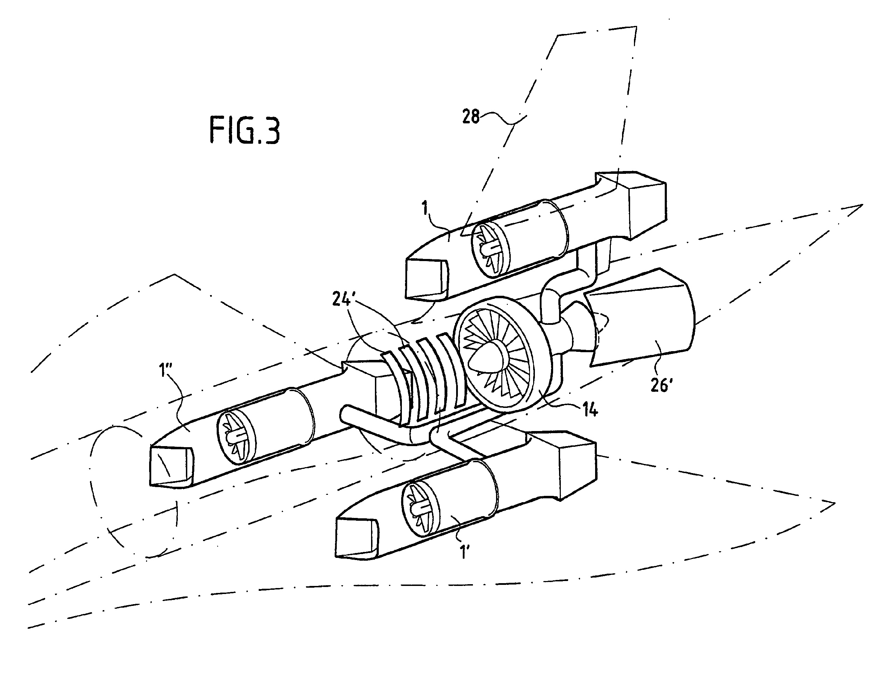

Selon un second mode de réalisation de l'invention représenté par la figure 3, le dispositif de propulsion comporte trois propulseurs (1, 1' et 1") alimentant un unique ensemble propulsif 14 distinct et dissocié des trois propulseurs. Comme pour l'exemple représenté par la figure 2, l'ensemble propulsif de ce mode de réalisation est directement intégré dans la partie arrière de l'avion et une tuyère d'échappement déployable 26' est prévue afin d'évacuer les gaz et de produire la poussée nécessaire au décollage, à l'atterrissage et en vol en croisière subsonique. Sur cet exemple, on voit que deux des propulseurs (1' et 1") sont disposés sous les ailes de l'avion, tandis que le troisième (1) est monté à l'emplature du stabilisateur vertical 28.

Les tubulures 22' reliant les sections d'éjection de chaque propulseur à la turbine de l'ensemble propulsif 14 débouchent au niveau de cette dernière dans des secteurs avantageusement isolés les uns des autres. Ainsi, en cas de panne de l'un des propulseurs, il n'y a pas de risque que les gaz produits par les deux autres propulseurs puissent pénétrer au niveau du propulseur en panne.

Par ailleurs, des ouïes 24' (latérales et/ou ventrales) obturables sont prévues sur le fuselage d'un avion pour assurer l'alimentation en air de l'ensemble propulsif 14. Au passage en vol de croisière supersonique, l'ensemble propulsif 14 n'est plus alimenté et est donc arrêté, les ouïes d'alimentation en air 24' sont obturées et la tuyère d'échappement 26' est rentrée. La traînée se trouve alors réduite à la seule traînée de nacelle des propulseurs.

Cette solution présente notamment l'avantage d'obtenir une bonne isolation acoustique de l'ensemble propulsif et de réduire les risques d'ingestion de corps étrangers au décollage de l'avion (débris sur la piste, morceaux de pneumatiques, volatiles, etc).

Bien entendu, on pourra imaginer tout autre mode de réalisation en combinant un ou plusieurs propulseurs avec un ou plusieurs ensembles propulsifs éventuellement escamotables.

Le procédé de fonctionnement du dispositif de propulsion selon la présente invention découle à l'évidence de ce qui précède.

Le dispositif de propulsion comprend au moins un propulseur capable de produire des gaz d'échappement pour générer une poussée pour les vitesses de vol supersonique et au moins un ensemble propulsif distinct et dissocié dudit propulseur, dépourvu de générateur de gaz et capable de générer une poussée pour le décollage, l'atterrissage et les vitesses de vol subsonique.

Le principe de fonctionnement de ce dispositif de propulsion consiste à dériver au moins une partie des gaz d'échappement produits par le ou les propulseur(s) vers l'ensemble propulsif afin que celui-ci génère une poussée pour le décollage, l'atterrissage et le vol en croisière subsonique.

Par contre, au passage en phase de vol en croisière supersonique et pendant celle-ci, on interrompt la dérivation des gaz d'échappement vers l'ensemble propulsif, le ou les propulseur(s) assurant alors seul(s) la propulsion.

Avantageusement, on obture au moins partiellement la sortie des gaz de combustion produits par le ou les propulseur(s) lors des phases de décollage et d'atterrissage de l'avion.

De préférence, en phase d'accélération et de vol en croisière subsonique, on ouvre légèrement la sortie des gaz d'échappement du ou des propulseur(s) afin de réduire la traînée de culot. Au passage en phase de vol en croisière supersonique, on arrête progressivement de dériver les gaz d'échappement produits par le ou les propulseur(s) et on ouvre progressivement la tuyère du ou des propulseur(s) jusqu'à l'arrêt de l'ensemble propulsif, le ou les propulseur(s) assurant alors seul(s) la propulsion.

La présente invention telle que décrite précédemment comporte de multiples avantages, et notamment :
- le dispositif de propulsion permet d'obtenir au décollage et à l'atterrissage une vitesse d'éjection des gaz inférieure à 400m/s (voire inférieure à 300m/s) ce qui correspond à un niveau de bruit inférieur à 103dB (90dB pour une vitesse inférieure à 300m/s);
- la poussée au décollage du ou des propulseur(s) peut par exemple être augmentée par rapport à celle du ou des propulseur(s) fonctionnant seul(s) par un effet multiplicateur de 150% à 300% environ suivant le diamètre de la soufflante de l'ensemble propulsif ce qui permet notamment de pouvoir réduire le nombre de moteurs de l'avion (trois au lieu de quatre, deux au lieu de trois, etc.) ;
- une forte baisse de la consommation spécifique en croisière subsonique peut être obtenue grâce à un haut taux de dilution qui est équivalent à celui des avions subsoniques ;
- dans les modes de réalisation à ensemble propulsif escamotable, la traînée des soufflantes est nulle en vol de croisière supersonique ;
- la transition du vol en croisière subsonique au vol en croisière supersonique est facilitée grâce à la dérivation progressive des gaz, et celle-ci peut également être rapide en cas de panne de la soufflante ;
- le dispositif de propulsion utilise un ou plusieurs propulseurs à architecture conventionnelle ce qui limite les risques de panne fréquemment liés aux technologiques nouvelles ;
- le cycle thermodynamique du dispositif reste indépendant de la répartition de la dérivation lors de la transition subsonique / supersonique ce qui facilite le pilotage du moteur ;
- sur le plan de la sécurité, la réserve de puissance des propulseurs, qui sont utilisés à régime un peu réduit lors du décollage et de l'atterrissage, peut permettre de maintenir une poussée suffisante en jet direct pour assurer le décollage (puis l'atterrissage) en cas de panne d'un propulseur ;
- en cas de panne mécanique de l'ensemble propulsif avec soufflante, on ouvre rapidement (si nécessaire) les tuyères d'échappement des propulseurs qui assurent alors la poussée nécessaire en jet direct pour le décollage et/ou l'atterrissage (la préoccupation n'étant plus de respecter les normes de bruit mais d'éviter tout accident de l'avion).

## Revendications

1. Dispositif de propulsion à cycle variable pour avion supersonique comprenant au moins un propulseur (1) comportant des moyens pour produire des gaz d'échappement et une tuyère (12) d'éjection de gaz pour générer une poussée pour les vitesses de vol supersonique, et au moins un ensemble propulsif auxiliaire (14) distinct et dissocié dudit propulseur, dépourvu de générateur de gaz, comportant une turbine (16) et au moins une soufflante (18) entraînée en rotation par ladite turbine et capable de générer une poussée pour le décollage, l'atterrissage et les vitesses de vol subsonique, ledit dispositif étant **caractérisé en ce qu'**il comporte en outre des moyens (20) de dérivation de flux gazeux mobiles entre une position dans laquelle ils dérivent au moins une partie des gaz d'échappement produits par ledit propulseur vers ledit ensemble propulsif afin que celui-ci génère une poussée pour le décollage, l'atterrissage et le vol en croisière subsonique, et une position dans laquelle les gaz produits par le propulseur (1) sont uniquement dirigés vers la tuyère (12) de celui-ci pour le vol en croisière supersonique, ledit ensemble propulsif auxiliaire (14) étant adapté à être logé dans un fuselage de l'avion de manière à réduire la traînée et à améliorer l'isolation acoustique.

2. Dispositif selon la revendication 1, **caractérisé en ce que** les moyens (20) de dérivation de flux gazeux sont notamment constitués de volets (20a, 20b) et d'au moins une tubulure (22) débouchant au niveau d'une entrée d'admission de la turbine (16).

3. Dispositif selon l'une des revendications 1 et 2, **caractérisé en ce qu'**il comporte au moins deux propulseurs (1, 1') alimentant en gaz un ensemble propulsif (14)

4. Dispositif selon l'une des revendications 1 et 2 **caractérisé en ce qu'**il comporte au moins trois propulseurs (1, 1' et 1") alimentant en gaz un ensemble propulsif (14).

## Claims

1. A variable cycle propulsion system for a supersonic airplane, the system comprising at least one engine (1) having means for producing exhaust gas and a gas exhaust nozzle (12) for generating thrust for supersonic flight speeds, and at least one separate auxiliary propulsion assembly (14) dissociated from said engine, having no gas generator, comprising a turbine (16) and at least a fan (18) rotated by said turbine and capable of generating thrust for takeoff, landing, and subsonic flight speeds, said system being **characterised in that** it further comprises gas flow tapping means (20) movable between a position in which they tap off at least a fraction of the exhaust gas produced by said engine and feed it to said propulsion assembly to enable it to generate thrust for takeoff, landing, and subsonic cruising flight, and a position in which the gas produced by the engine (1) is directed solely to the engine nozzle (12) for supersonic cruising flight, said auxiliary propulsion assembly (14) being suitable for being integrated in the fuselage of the airplane so as to reduce drag and improve sound insulation.

2. A system according to claim 1, **characterised in that** the gas flow tapping means (20) are constituted in particular by flaps (20a, 20b) and by at least one tube (22) opening out into an admission inlet of the turbine (16).

3. A system according to claim 1 and 2, **characterised in that** it comprises at least two engines (1, 1') feeding a propulsion assembly (14) with gas.

4. A system according to claim 1 and 2, **characterised in that** it comprises at least three engines (1, 1', and 1") feeding a propulsion assembly (14) with gas.

## Patentansprüche

1. Antriebsvorrichtung mit variablem Zyklus für Überschallflugzeuge, umfassend wenigstens ein Triebwerk (1) mit Mitteln zur Erzeugung von Abgasen und einer Schubdüse (12), um einen Schub für die Überschallfluggeschwindigkeiten zu erzeugen, sowie wenigstens eine selbständige und von dem genannten Triebwerk getrennte Hilfsantriebseinheit (14) ohne Gaserzeuger, die eine Turbine (16) und wenigstens ein Gebläse (18) umfaßt, das über die Turbine drehangetrieben wird und geeignet ist, einen Schub für das Abheben, die Landung und die Unterschallfluggeschwindigkeiten zu erzeugen, wobei die Vorrichtung **dadurch gekennzeichnet ist, daß** sie ferner Mittel (20) zur Umleitung des Gasstroms aufweist, die zwischen einer Position, in der sie wenigstens einen Teil der durch das Triebwerk erzeugten Abgase zu der genannten Antriebseinheit umleiten, damit diese einen Schub für das Abheben, die Landung und den Unterschallreiseflug erzeugt, und einer Position, in der die durch das Triebwerk (1) erzeugten Gase einzig und allein zu dessen Düse (12) für den Überschallreiseflug geleitet werden, beweglich sind, wobei die Hilfsantriebseinheit (14) entsprechend ausgebildet ist, um in einem Rumpf des Flugzeugs derart untergebracht zu werden, daß der Luftwiderstand reduziert und daß die Schalldämmung verbessert wird.

2. Vorrichtung nach Anspruch 1, **dadurch gekennzeichnet, daß** die Mittel (20) zur Umleitung des Gasstroms insbesondere von Klappen (20a, 20b) und von wenigstens einem Stutzen (22) gebildet sind, der im Bereich eines Einströmeingangs der Turbine (16) mündet.

3. Vorrichtung nach einem der Ansprüche 1 und 2, **dadurch gekennzeichnet, daß** sie wenigstens zwei Triebwerke (1, 1') aufweist, welche eine Antriebseinheit (14) mit Gas beaufschlagen.

4. Vorrichtung nach einem der Ansprüche 1 und 2, **dadurch gekennzeichnet, daß** sie wenigstens drei Triebwerke (1, 1' und 1") aufweist, welche eine Antriebseinheit (14) mit Gas beaufschlagen.
